# EUROPEAN PATENT SPECIFICATION

(11) **EP 2 020 521 B1**
(45) Date of publication and mention of the grant of the patent: **27.02.2013**
(21) Application number: 08155876.9
(22) Date of filing: 08.05.2008
(51) Int. Cl.: F16D 48/06, F16D 25/12, F16D 48/02

(54) **Hydraulic vehicle clutch system and method**
Hydraulisches Kupplungssystem und Verfahren für ein Fahrzeug
Système d'embrayage hydraulique et procédé pour un véhicule

(30) Priority: 02.08.2007 US 832860
(43) Date of publication of application: 04.02.2009
(73) Proprietor: Honda Motor Co., Ltd., Tokyo 107-8556 (JP)
(72) Inventor: Asano, Tetsushi, Raymond, OH 43067-9705 (US)
(74) Representative: Rupp, Christian

(56) References cited:
- EP-A- 1 236 918
- WO-A-2005/064187
- DE-A1-102005 014 654
- US-A1- 2004 159 520
- US-A1- 2005 023 102

## Description

### BACKGROUND

### 1. Field

The presently disclosed subject matter relates to a vehicle clutch actuator and in particular a hydraulically controlled clutch actuator for a wet-type multiple disc clutch and its associated method.

### 2. Description of the Related Art

Existing vehicle drive force transfer systems deliver a torque from the engine to the wheels of the vehicle through the vehicle drive train / transmission. In a torque transfer system for on-demand or user actuated four wheel drive modes for a vehicle, power from the engine transmission may be selectively split between the front and rear wheels by incorporating a clutch mechanism in a rear wheel differential.

One example of a user controlled power transmitting device is described in U.S. Pat. No. 5,135,071 to Shibahata et al*.* Torque from a propeller shaft is transferred to a pair of rear wheel axles through a speed control device and a pair of left and right variable torque transmitting clutches. Each variable torque transmitting clutch is enclosed in a clutch case and contains multiple pairs of inner and outer friction plates or discs which are pressed together by a clutch actuating mechanism. When these pairs of discs are brought together, torque supplied by a common shaft is transferred to the drive axle of a wheel. The clutch actuating mechanism for these plates have sometimes included an electromagnetic actuator that controls a piston with presser members which are used to press the clutch mechanism's inner and outer plate pairs together. However, typically, a hydraulically controlled piston type actuating mechanism has been utilized, such as that described in U.S. Patent No. 6,848,555 to Takatoshi Sakata et al*.*

The concept of providing and managing an on-demand type of torque transfer mechanism in which variable torque is provided in a four wheel drive system has also recently been implemented. Such a mechanism is known to provide excellent vehicle stability and control in all types of weather and road conditions. In addition, variable torque four wheel drive systems often minimize the drawbacks of conventional four-wheel drive systems in terms of weight, noise, performance and design capacity limits. U.S. Patent No. 7,021,445 to Brissenden discloses an on-demand type of variable torque transfer mechanism for incorporation into a vehicle drive train. Unlike conventional on-demand four-wheel drive systems, which often react only to wheel slippage, the conventional variable torque management systems do not wait for wheel slip before beginning activation of semi or total four wheel drive mode. Instead, torque is proactively delivered to the rear wheels whenever the vehicle is accelerating for improved traction and control in both dry and slippery road conditions. When wheel slippage is detected, a variable torque management system can be configured to apportion additional torque to the rear in proportion to the amount of wheel slip. The system can continuously monitor the vehicle's dynamic condition via sensors in the engine, brake and throttle systems, and can adjust front-to-rear torque split for maximum control.

A central, computer-controlled, Power Control Unit (PCU) has been used to determine the right level of torque split (using sophisticated algorithms) for any given moment to provide optimal traction and stability. Torque can be delivered to the rear wheels via an electronic rear differential mechanism that employs a set of electrically controlled wet clutch packs to take up torque from the propeller shaft as the system demands.

Electric clutch actuation for on-demand type clutch mechanisms is currently a very common mode of actuation for the on-demand clutch mechanism. Recently, hydraulic actuation of the clutch has also been attempted. However, there remains a need to advance hydraulic clutch actuation techniques, and to address recognized system limitations. For example, the size, weight, and electrical power consumption requirements along with cooling capacity of current hydraulic clutch mechanisms currently can result in bulky and expensive systems that are sometimes hampered by limited power characteristics, limited reaction time characteristics, limited cooling capacity, limited control, weight considerations, etc.

EP Patent Publication No. 1236918 discloses a clutch system comprising an operating unit for operating the clutch hydraulically using hydraulic cylinders. The operating unit has a hydraulic medium supply device consisting of a pump arrangement which can be influenced by a releasing pressure, a conveyed amount and/or a conveyor device. The pump is arranged so that the pressure level and thus the operating state can be adjusted. The pump arrangement is connected to the cylinders via a hydraulic medium connection containing no control valve unit for adjusting the pressure level.

A hydraulic system for two multiple clutches are disclosed in WO 2005/064187 A1. The system comprises at least one pump for generating a pressure for actuation of the clutches. The pressure is controlled by a pair of valves, one of them arranged in the line connecting the pump and the piston for actuating the clutch.

### SUMMARY

According to one example, a hydraulic actuator for a clutch mechanism includes an electric pump and a purge valve controlled by an electronic control unit. The hydraulic pressure output from the pump is set to be higher than the operating pressure for the clutch and the purge valve is controlled to selectively purge hydraulic pressure from a supply line so that precise control over an operating pressure for the clutch is maintained. According to this example, a minimum number of pressure adjusting hydraulic components are needed for clutch control.

According to the invention, an apparatus for transferring a torque from a vehicle drive train to multiple wheels of a vehicle a rear axle drive and a rear differential include at least two clutches each having a driven part and a driving part, a hydraulic system configured to actuate each of the clutches by placing the driven part into engagement with the driving part, the hydraulic system including, at least two pistons configured to move each of the driven parts into engagement with a respective driving part when an operating hydraulic fluid pressure is supplied to the pistons, at least two pumps configured to supply an output hydraulic fluid pressure, at least two purge valves each located between and connected in parallel with one of the pumps and a respective one of the pistons, a first hydraulic line connecting directly between a first of the pistons and a first of the purge valves such that there is no substantial change of hydraulic pressure along the first hydraulic line, and a second hydraulic line connecting directly between a second of the pistons and a second of the purge valves such that there is no substantial change of hydraulic pressure along the second hydraulic line, and a controller configured to control the pumps and the purge valves to provide a desired hydraulic pressure to respective ones of the pistons.

According to yet another aspect of the disclosed subject matter, an apparatus for transferring a torque from a vehicle drive train to at least two wheels of a vehicle, can include a first clutch having a first driven part and a first driving part, a second clutch having a second driven part and a second driving part, a hydraulic system configured to independently and selectively actuate the first clutch and the second clutch by placing the first driven part into engagement with the first driving part and by independently and selectively placing the second driven part into engagement with the second driving part, the hydraulic system including, a first piston configured to move the first driven part into engagement with the first driving part to actuate the first clutch when a first operating hydraulic pressure is supplied to the first piston, a second piston configured to move the second driven part into engagement with the second driving part to actuate the second clutch when a second operating hydraulic pressure is supplied to the second piston, a first pump configured to supply a first output hydraulic pressure, a second pump configured to supply a second output hydraulic pressure, a first purge valve connected in parallel with the first pump and the first piston, a second purge valve connected in parallel with the second pump and the second piston, a first pump hydraulic line connected between the first pump and the first purge valve, and a first piston hydraulic line connected between the first purge valve and the first piston, wherein the hydraulic system is configured such that when the first clutch is actuated a first pump pressure of hydraulic fluid is substantially the same along the entire first pump hydraulic line from the first pump to the first purge valve, and the hydraulic system is also configured such that when the first clutch is actuated a first piston pressure of hydraulic fluid is substantially the same along the entire first piston hydraulic line from the first purge valve to the first piston; and a controller configured to separately and independently control at least one of the first pump and first purge valve and at least one of the second pump and second purge valve to provide a first desired hydraulic pressure to the first piston and a second desired hydraulic pressure to the second piston, respectively.

According to still another aspect of the disclosed subject matter, a method for transmitting torque to at least two vehicle drive components, can include providing a first vehicle clutch configured to transmit torque from a vehicle power unit to a first vehicle wheel when the first vehicle clutch is actuated, providing a second vehicle clutch configured to transmit torque from the vehicle power unit to a second vehicle wheel when the second vehicle clutch is actuated, providing a first hydraulic circuit including hydraulic fluid and in which a first pump is connected by a first pump line to a first purge valve, and the first purge valve is connected to a first piston by a first piston line, the first piston being configured to actuate the first vehicle clutch when a first operating pressure of the hydraulic fluid is applied to the first piston, and the first pump being configured to act on the hydraulic fluid to output a first pump hydraulic pressure, providing a second hydraulic circuit including hydraulic fluid and in which a second pump is connected by a second pump line to a second purge valve, and the second purge valve is connected to a second piston by a second piston line, the second piston being configured to actuate the second vehicle clutch when a second operating pressure of the hydraulic fluid is applied to the second piston, and the second pump being configured to act on the hydraulic fluid to output a second pump hydraulic pressure, controlling a hydraulic fluid pressure in the first piston line without the use of an accumulator by opening the first purge valve to cause hydraulic fluid pressure in the first piston line to be substantially equal to the operating hydraulic pressure for the first piston, and controlling a hydraulic fluid pressure in the second piston line without the use of an accumulator by opening the second purge valve to cause hydraulic fluid pressure in the second piston line to be substantially equal to the operating hydraulic pressure for the second piston.

According to another aspect of the disclosed subject matter, an apparatus for transferring a torque from a vehicle transmission to a wheel of a vehicle can include a clutch having a driven part and a driving part, a hydraulic system configured to actuate the clutch by placing the driven part into engagement with the driving part, the hydraulic system including operating structures that are configured to either act upon or to be acted upon by a hydraulic fluid resulting in a change of pressure of the hydraulic fluid. The operating structures can consist essentially of a piston configured to move the driven part into engagement with the driving part when an operating hydraulic pressure is supplied to the piston, a pump configured to supply an output hydraulic pressure to the piston, and a purge valve located between the pump and the piston. The apparatus can also include a controller configured to control the pump and purge valve to provide a desired hydraulic pressure to the piston.

According to yet another aspect of the disclose subject matter, an apparatus for transferring a torque from a vehicle transmission to two wheels of a vehicle can include a first clutch having a first driven part and a first driving part, a second clutch having a second driven part and a second driving part, a hydraulic system configured to independently and selectively actuate the first clutch and the second clutch by placing the first driven part into engagement with the first driving part and by independently and selectively placing the second driven part into engagement with the second driving part. The hydraulic system can include a first piston configured to move the first driven part into engagement with the first driving part to actuate the first clutch when a first operating hydraulic pressure is supplied to the first piston, a second piston configured to move the second driven part into engagement with the second driving part to actuate the second clutch when a second operating hydraulic pressure is supplied to the second piston, a first pump configured to supply a first output hydraulic pressure, a second pump configured to supply a second output hydraulic pressure, a first purge valve located between the first pump and the first piston, a second purge valve located between the second pump and the second piston, a first pump hydraulic line connected between the first pump and the first purge valve, and a first piston hydraulic line connected between the first purge valve and the first piston. The hydraulic system can be configured such that a first pump pressure of hydraulic fluid is the same along the entire first pump hydraulic line from the first pump to the first purge valve, and the hydraulic system is also configured such that a first piston pressure of hydraulic fluid is the same along the entire first piston hydraulic line from the first purge valve to the first piston. The apparatus can also include a controller configured to separately and independently control the first pump and first purge valve and the second pump and second purge valve to provide a first desired hydraulic pressure to the first piston and a second desired hydraulic pressure to the second piston.

According to still another aspect of the disclosed subject matter, a method for transmitting torque to a vehicle drive component can include providing a first vehicle clutch configured to transmit torque from a vehicle power unit to a first vehicle wheel when the first vehicle clutch is actuated, providing a first hydraulic circuit including hydraulic fluid and in which a first pump is connected by a first pump line to a first purge valve, and the first purge valve is connected to a first piston by a first purge valve line, the first piston being configured to actuate the vehicle clutch when a first operating pressure of the hydraulic fluid is applied to the first piston, and the first pump being configured to act on the hydraulic fluid to output a first pump hydraulic pressure. The method can also include increasing the first pump hydraulic pressure that is output by the first pump until the first pump hydraulic pressure is greater than the first operating pressure, and opening the first purge valve to cause hydraulic fluid pressure in the first purge valve line to be equal to the operating hydraulic pressure for the first piston.

### BRIEF DESCRIPTION OF THE DRAWINGS

The disclosed subject matter of the present application will now be described in more detail with reference to exemplary embodiments of the apparatus and method, given only by way of example, and with reference to the accompanying drawings, in which:

FIG. 1 is a schematic diagram of an example of a hydraulic vehicle clutch system made in accordance with principles of the disclosed subject matter;

FIG. 2 is a schematic diagram of another embodiment of a hydraulic vehicle clutch system made in accordance with principles of the disclosed subject matter;

FIG. 3 is a flow diagram illustrating a process flow for the hydraulic vehicle clutch system of FIG. 1;

FIG. 4 is a set of comparative charts showing torque command signal, oil pressure, and pump control signal with respect to time for a direct drive system and for a purge valve system made in accordance with principles of the disclosed subject matter; and

FIG. 5 is a schematic diagram of another embodiment of a hydraulic vehicle clutch system made in accordance with principles of the disclosed subject matter.

### DETAILED DESCRIPTION OF EXEMPLARY EMBODIMENTS

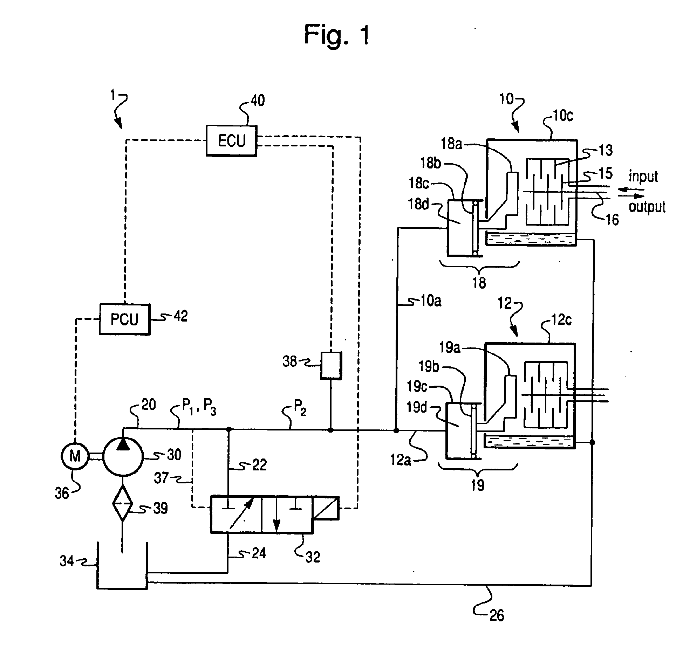

FIG. 1 depicts a schematic hydraulic circuit diagram for an example of a hydraulic vehicle clutch system 1 made in accordance with principles of the disclosed subject matter. The system 1 can include a pump 30 that is connected to a pair of wet-type multi-disc friction clutches 10 and 12, respectively, via hydraulic fluid lines. A purge valve, such as solenoid valve 32, can be used to regulate the hydraulic pressure delivered to the clutches 10, 12. In one embodiment of the disclosure, the clutches 10, 12 may be a pair of variable torque transmitting clutches that are integrated into a vehicle's rear differential mechanism. When engaged, the clutches 10, 12 transfer torque from a propeller shaft to the rear wheels of the vehicle. The amount of torque transfer can be varied by varying the amount of fluid pressure that is delivered to each of the clutches 10, 12, as will be described in more detail below. Separate ones of the clutches 10, 12 can be located on opposite sides of the rear differential, such as between a left wheel and the rear differential and between the right wheel and the rear differential, respectively. In an example not according to the invention, at least one clutch set can be located in the drive shaft between the engine/power plant and the rear differential to provide drive to the rear wheels.

For purposes of the description of this embodiment, the description for the clutch 10 applies equally to clutch 12. The clutch 10 may include a series of outer friction plates 13 (a driving part) and inner friction plates 15 (a driven part). A drive axle 16 for a vehicle wheel is connected to the inner plates 15. Friction plates 13, 15 can be immersed in a lubricating fluid (e.g., hydraulic oil, etc.) located in a clutch case 10c. Outer friction plates 13 may be connected to a common shaft which is coupled to, for example, a planetary gear system. In the alternative, the outer friction plates 13 can be configured to be driven by a propeller shaft and hypoid gear in combination. The hypoid gear being similar in construction to a spiral bevel gear, but designed to connect non-parallel shafts that do not intersect (e.g., connecting the propeller shaft with the shaft of the outer friction plates 13). Thus, the outer friction plates 13 can be driven from an input from a vehicle power unit (e.g., internal combustion engine, electric motor, etc.). For example, the vehicle power unit can supply power to the outer friction plates 13 via a vehicle drive train which can include a rear differential that is connected to a drive shaft and vehicle transmission. Of course, a front differential can also be provided in the vehicle drive train to provide power to the front wheels of the vehicle.

An actuation device 18 can be used to actuate the clutch 10. As shown in Fig. 1, the actuation device 18 includes a presser member 18a connected to a hydraulic piston 18b. When the hydraulic piston 18b is displaced by hydraulic fluid, presser member 18a presses the outer plates 13 into engagement with the inner plates 15, thereby coupling the plates 13, 15 in torsion. Torque may then be transferred from the power unit and drive train via the clutch 10 to the drive axle 16. The actuation device 18 includes a cylinder 18c forming a chamber 18d. The hydraulic piston 18b is displaced within the chamber 18d by hydraulic pressure introduced into the chamber 18d. Hydraulic pressure is supplied to piston chamber 18d through first piston line 10a.

Hydraulic pressure can be delivered to the clutches 10, 12 via a pump line 20 that is connected to first and second piston lines 10a and 12a which are respectively connected to the first and second pistons/chambers 18b&c, 19 b&c. A pump 30 and motor 36 can be configured to act in combination with valve 32 to produce a standby pump pressure P1 and an active pump pressure P3 in the pump line 20. However, the production of the standby pump pressure P1 is not necessary. For example, the pump and motor can simply circulate hydraulic fluid for cooling purposes, etc., when an active pump pressure P3 is not required by the system. In addition, the pump and motor can be powered off when not needed, and the system would not provide any pressurized fluid flow that would cool and/or lubricate the system. A purge valve, such as solenoid 32, can be configured to reduce the hydraulic pressure supplied to the first and second piston lines 10a, 12a by diverting a portion of the fluid delivered from the pump 30. For example, a valve input line 22 can connect the valve 32 to the supply line 20. A valve output line 24 then directs fluid to the reservoir 34 after passing through the valve 32. Thus, the valve 32 can be considered to be connected "in parallel" with the pump 30 and actuation device(s). A pilot line 37 can be provided with the valve 32 to provide a feedback passage to the valve 32. Moreover, valve 32 can be configured to act as a balance valve which balances the solenoid thrust force, generated upon receipt of a signal from ECU 40, with pressure from the feedback line 37. The valve input line 22 and pilot line 37 can be considered passage lines that allow the valve 32 to be connected in parallel with the pump 30 and the actuation device(s) 18, 19. Thus, the pump 30 activates the actuation device(s) 18, 19 regardless of the position of the valve 32. The valve 32 can be used to control the pressure seen by the actuation device(s) 18, 19, but not to specifically turn on and off the actuation device(s) 18, 19.

A pressure sensor 38 can be used in the system to detect piston pressure P2, which is the pressure of the hydraulic fluid located downstream of the valve 32 and which is the pressure realized at the first and second pistons/chambers 18b&c, 19 b&c. The pump 30 draws hydraulic fluid from a reservoir 34 which receives the hydraulic fluid removed from the supply line 20 by the valve 32 and the hydraulic fluid returned from the clutch cases 10c and 12c via return line 26. A filter 39 can be placed between the pump 30 intake and the reservoir 34 to clean the hydraulic fluid before it is re-routed through the hydraulic circuit(s). In addition, if desired, a separate cooling/lubrication pump can be provided that is configured to separately feed oil or other cooling fluid to the clutch 10 and/or clutch 12.

As noted above, the hydraulic components of the system 1 can be integrated into a rear casing of a vehicle that includes clutches 10, 12 and a rear differential. The relatively few component parts that may be used for the hydraulic actuator according to this disclosure can reduce the complexity, weight and packaging requirements of a clutch actuator, without losing an ability to retain precise, on-demand control over the clutches 10, 12 during a variety of driving conditions. Additionally, it has been found that the hydraulic actuator system can affect a transfer of high torque loads over a short duration through the clutches without the need for cams or additional friction plates in the clutch. In one embodiment, the hydraulic actuator system can be configured for producing a maximum operating pressure of 1 MPa for clutches 10 and 12 (and pistons 18 & 19). However, pump design can be reconfigured to easily permit an operating pressure of 3MPa or more. It should be understood that a pressure force EM clutch operates at a force that is less than a force that a hydraulic clutch is able to produce, for example 300-350kgf as compared to 1000kgf or more.

The dashed lines in FIG. 1 indicate the control lines for the various hydraulic components. For example, the valve 32 can be controlled by an electronic control unit (ECU) 40, which signals when clutches 10, 12 should be actuated to provide additional or different drive force to the vehicle's wheel(s). A pump motor 36 can be controlled by a pump control unit (PCU) 42 which is controlled by commands sent from the ECU 40. It will be understood that although FIG. 1 illustrates ECU 40 and PCU 42 as separate from each other, these controllers may be integrated into a single ECU. Further, the PCU 42 may be located at the same or a different location from the hydraulic actuator. In one embodiment, the pump 30 can be a fixed displacement electric pump. The motor 36 can be a brushless DC motor, and the valve 32 can be a two position, two-way linear solenoid valve. The valve 32 may be operated in a fully open position, fully closed position, or at intermediate positions as directed by the ECU 40 to provide a great deal of control with regard to the amount of torque that is transmitted by the clutches 10, 12. Moreover, the valve position can depend on a combination of the hydraulic pressure and the command signal provided by the ECU 40.

It should be noted that the hydraulic system 1 of FIG. 1 is devoid of an accumulator, which is typically used for storing hydraulic pressure needed to activate clutches 10, 12. Instead, when the ECU 40 determines that the clutches need to be actuated, a control signal is sent to motor 36 to increase the output pump pressure P3 to a value that may be greater than the desired operating pressure for clutches 10, 12. The output pressure P3 may be further adjusted depending on the torque loading requirements while the clutches 10, 12 are actuated. It should also be mentioned that hydraulic system 1 may include only two hydraulic components that regulate hydraulic pressure that is seen at the piston: the pump 30 and the valve 32. Thus, a greatly simplified hydraulic actuator design, providing weight savings and reduced packaging size for the clutches is possible. The system can be configured to be primarily static in nature, such that P1=P2=P3 when balance is achieved.

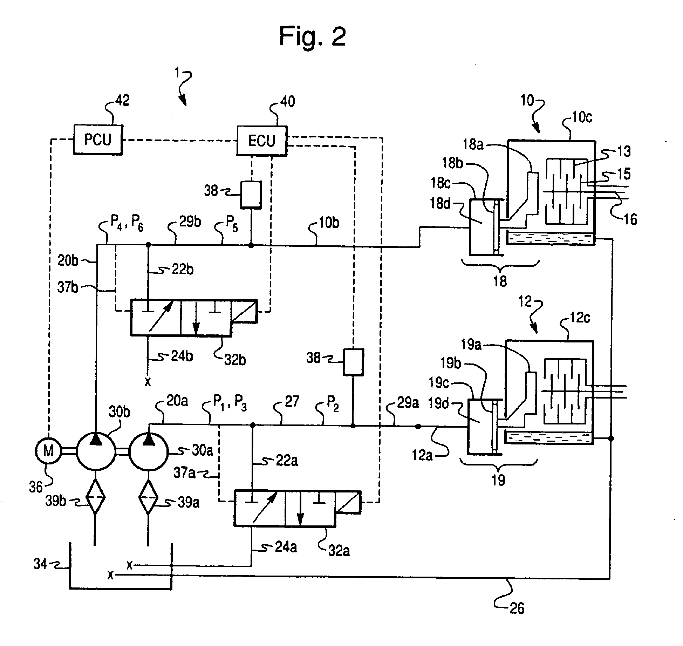

FIG. 2 is a schematic diagram of another embodiment of a hydraulic vehicle clutch system in which two pumps 30a and 30b are provided to circulate hydraulic fluid within two separately and independently controllable hydraulic circuits 29a and 29b. The separate circuits 29a and 29b allow independent and selective control of each of the clutches 10 and 12 such that two separate drive wheels of a vehicle can be independently and selectively driven. Thus, vehicle stability control and highly accurate drive slippage control can be accomplished using the system shown in Fig. 2. For example, if the system is installed in a rear differential for a vehicle and the vehicle is cornering, additional torque can be applied to an appropriately selected (typically outside) drive wheel to provide greater steerage. Determination of amount and application of torque can be made by the ECU 40 and/or PCU 42 based on several factors, including acceleration amount, steering angle, braking amount, suspension location, interaxle speed difference, drive torque, vehicle speed, yaw moment, etc.

The first circuit 29a can include a first pump 30a that is connected to a first purge valve, such as a solenoid valve 32a, by a first pump line 20a. The first valve 32a can be connected to the first clutch 12 by a first piston line 12a. A pressure sensor 38 can be located at a position along the first piston line 12a to monitor and report the pressure P2 thereof to the ECU 40. When the ECU 40 determines that actuation of clutch 12 is desired, the ECU 40 can send a signal to the motor 36 via the PCU 42 to cause the motor 36 to increase pump output from first pump 30a. The increased pump output causes pressure in the first pump line 20a to increase from a standby pressure P1 (or no pressure) to an active pressure P3. The active pressure P3 is greater than the desired operating pressure for the clutch 12. The ECU 40 then controls the valve 32a to divert hydraulic fluid from the first pump line 20a such that pressure in the piston line 12a is maintained at P2, which is substantially equal to the desired operating pressure for the clutch 12. Control of the valve 32a can be dynamic in nature such that the pressure P2 seen at the piston 19b rises quickly and arrives at the clutch/piston operating pressure smoothly and with little overshoot or fluctuation, regardless of the higher flow or pressure being output by the first pump 30a. If desired, a pilot line 37a can be provided with the valve 32a to provide a feedback passage to the valve 32a. While immediately after actuation, the system is dynamic in nature, the system can be configured to be primarily static in nature, such that P1=P2=P3 when balance is achieved.

Alternatively, control of pressure P2 can be accomplished solely through control of valve 32a if the output pressure produced by first pump 30a is maintained at a high enough pressure to provide the entire range of possible desired operating pressures for the clutch 12. In such a set up, there is no need for the pump to provide a standby pressure P1 - the pump would only output an active pressure P3 that is higher than any possible desired operating pressure for the clutch 12. While such a system may be more responsive and easier to control, certain energy loss and component wear characteristics may not be desirable. Thus, the ECU 40 can be programmed to control one or both of the motor 36 and first valve 32a depending on various operating parameters, user choice, etc.

The second circuit 29b can include a second pump 30b that is connected to a second purge valve, such as a solenoid valve 32b, by a second pump line 20b. The second valve 32b can be connected to the second clutch 10 by a second piston line 10b.
A pressure sensor 38 can be located at a position along the second piston line 10b to monitor and report the pressure P5 thereof to the ECU 40. When the ECU 40 determines that actuation of clutch 10 is desired, the ECU 40 can send a signal to the motor 36 via the PCU 42 to cause the motor 36 to increase pump output from second pump 30b. The increased pump output causes pressure in the second pump line 20b to increase from a standby pressure P4 (or no pressure) to an active pressure P6. The active pressure P6 can be greater than the desired operating pressure for the second clutch 10. The ECU 40 then controls the second valve 32b to divert hydraulic fluid from the second pump line 20b such that pressure in the piston line 10b is maintained at P5, which is substantially equal to the desired operating pressure for the clutch 10. Control of the valve 32b can be dynamic in nature such that the pressure P5 seen at the piston 18b rises quickly and arrives at the clutch/piston operating pressure smoothly and with little overshoot or fluctuation, regardless of the higher pressure being output by the second pump 30b. If desired, a pilot line 37b can be provided with the valve 32b to provide a feedback passage to the valve 32b.

Similar to the first circuit 29a, the second circuit 29b can achieve control of pressure P5 solely through controlling valve 32b if the output pressure produced by first pump 30a is maintained at a high enough pressure to provide the entire range of possible desired operating pressures for the second clutch 10.

Because the first clutch 12 and the second clutch 10 are operated through the use of separate hydraulic circuits 29a and 29b, respectively, each of the clutches can be separately and independently controlled with respect to each other. If the drive axles 16 are connected to rear wheels of a vehicle, the separate and independent control allows a user to control lateral torque distribution in the vehicle, as well as provide steering assistance, drive stabilizing functions, direct yaw control, etc. Of course, these features could also be realized if other combinations of vehicle wheels are powered by the clutches 10 and 12.

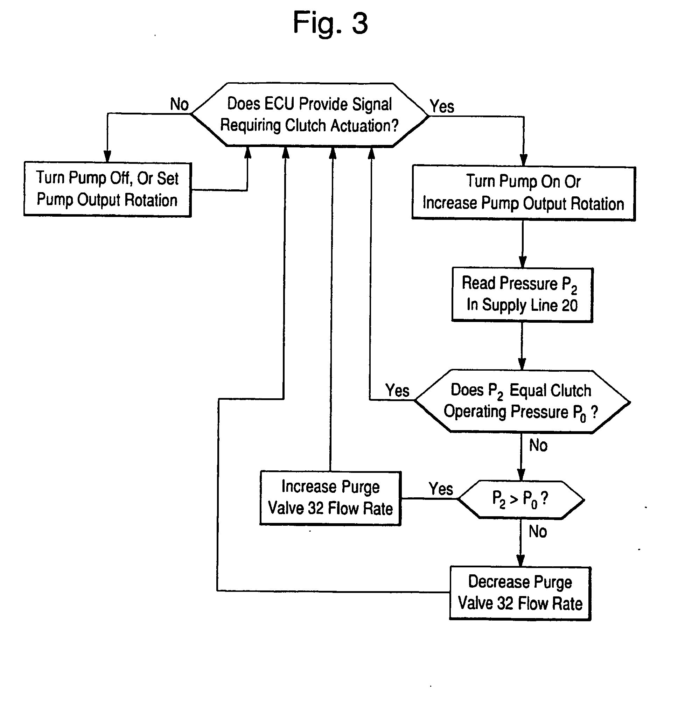

FIG. 3 is a flow diagram illustrating a process flow for the hydraulic vehicle clutch system of FIG. 1 in which the ECU 40 can be used to provide control over the entire hydraulic system 1. If the ECU 40 determines that the clutch or clutches do not need to be activated (no additional or different drive source for the vehicle is required), then the ECU 40 sends a signal to the PCU 42 to maintain the output pump rotation at a preset level (which can be zero). An associated standby pressure is thus output from the pump, which can be zero if the preset rotation of the pump is zero. When the ECU 40 determines that the clutch or clutches need to be actuated, a signal is sent to the PCU 42 from the ECU 40 to increase the pump 30 output flow to achieve pressure P3 which has higher potential than the operating pressure needed for clutches 10, 12 to output the particular/desired torque transmission. The ECU 40 then reads the pressure P2 detected at the downstream piston line 20 by the pressure sensor 38. Depending on the pressure reading received from the pressure sensor 38, the ECU 40 then sends a signal to the valve 32 to change the purge rate from either fully closed (no purge) to fully open (full purge) or possibly somewhere in between (partial purge). If the piston line 20 pressure P2 is equal to the desired operating pressure Po of the clutch 10 and/or clutch 12, the flow rate through the valve 32 is maintained. If the pressure P2 begins to exceed the operating pressure Po, the flow rate through the valve 32 is increased, thereby reducing the pressure P2 and maintaining it at Po. Conversely, if the pressure P2 begins to drop below the operating pressure Po, the flow rate through the valve 32 is decreased to maintain it at Po. Moreover, the ECU 40 controls pressure P2 (and not flow, per se) by controlling valve 32, which can be configured as a linear pressure control valve (e.g., not a flow control valve).

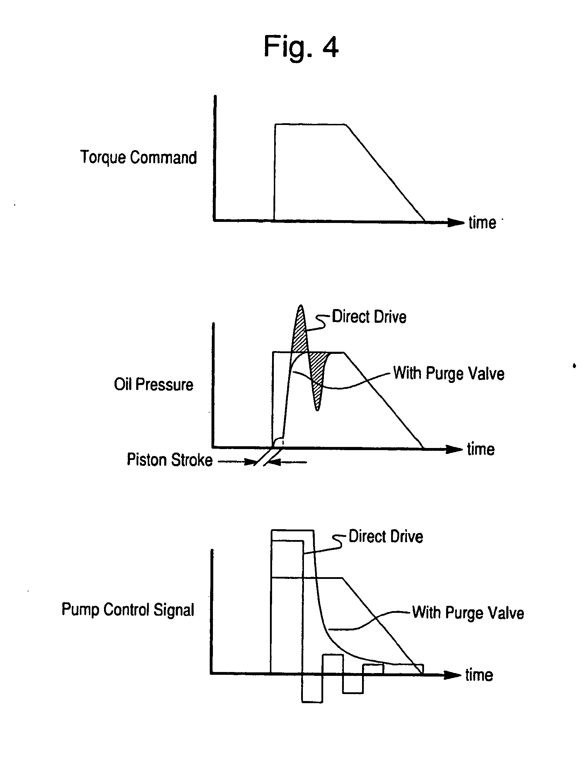

Fig. 4 shows a set of comparative charts showing torque command signal, oil pressure, and pump control signal with respect to time for a direct drive system and for a purge valve system made in accordance with principles of the disclosed subject matter. The lines representing the direct drive system are shown for comparison purposes and correspond to a system in which a pump is connected directly to a piston/clutch mechanism with no purge valve located therebetween. In such a case, as shown in the Oil Pressure chart, when the pump receives a signal from the ECU to increase the pressure of hydraulic fluid in the hydraulic circuit, precise control of the pressure is difficult. Initially, the pressure typically shoots past the desired operating pressure, then is over controlled/reduced to a pressure well below the desired operating pressure, and undergoes several correcting actions/fluctuations before stabilizing at the desired operating pressure. By contrast, when a purge valve is used in this circuit, as shown in the Oil Pressure chart, the hydraulic pressure takes slightly longer to initially arrive at desired operating pressure, but very little fluctuation of pressure occurs after the initial arrival, and highly accurate control is thus achieved. It is believed that this is achieved because the purge valve controls the initial energy/pressure burst produced by the pump and removes the large fluctuation of pressure that would otherwise be initially present in the hydraulic circuit.

Use of a hydraulic circuit vehicle clutch system that consists only of an oil pump and a clutch provides a simple and light weight system. However, as can be seen in Fig. 4, control precision is lacking (even when a motor control system is precisely controlled). The use of a purge valve in the system provides the desired control precision while not adding significant weight, size or cost. When used with a system that includes right and left torque distribution (e.g., the system shown in Fig. 3), the use of the system with a purge valve provides even greater weight size and cost reduction characteristics. Additionally, due to the ability to increase the clutch thrust, the presently disclosed subject matter also makes it possible to decrease not only the weight of the system but also the size (and weight) of the clutch structure itself.

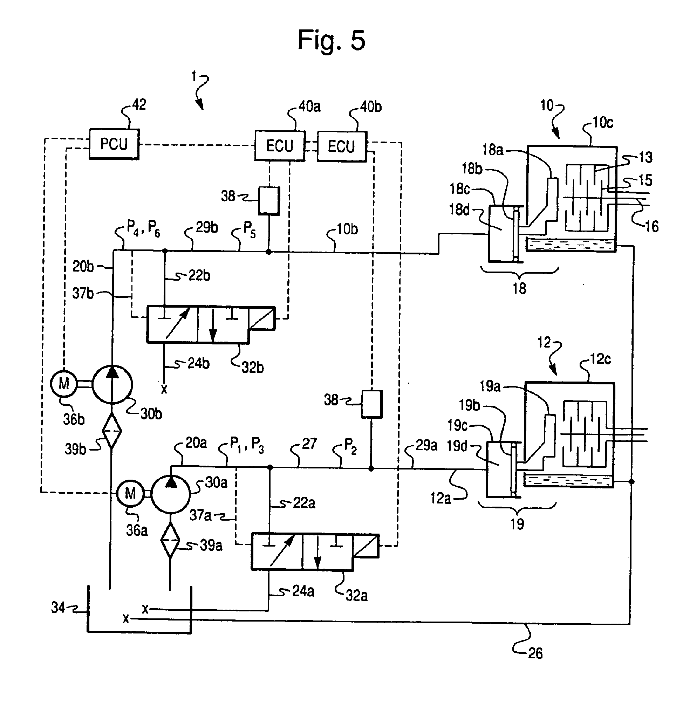

As shown in Fig. 5, a multi-circuit device can include two separate motors 36a and 36b that can be controlled either together or separately to provide power to the two circuit pumps 30a and 30b, respectively. Thus, an entire circuit can be de-activated if desired. Two ECU's 40a and 40b can also be provided to separately control each of the hydraulic circuits 29a and 29b and to provide redundancy backup in case one ECU malfunctions and must be de-activated. Moreover, the motor 36a and pump 30a can both be actuated at different times and at different speeds with respect to the motor 36b and pump 30b to selectively provide different operating characteristics to either of the circuits.

Although the purge valve is described as a variable-type linear solenoid valve, other types of valves can be used. For example, pneumatic valves or hydraulic valves could replace the solenoid valve. In addition, other electronically controlled valves could be used, such as servo-valves, spring valves, duty controlled valves, other types of linear and non-linear solenoid valves, etc. With regard to the pump, a typical hydraulic fluid pump can be used, including oil pump, etc. A motor can be used for each pump, or a single motor can be used to drive two or more pumps (as shown in the embodiment of Fig. 2). However, if a single motor is used, respective dynamic control of the hydraulic pressure in each of the hydraulic circuits can be accomplished only by varying the purge valve(s). The motor can be an electric motor, a pneumatic motor, hydraulic motor, or other type of power unit. Any of the components can be configured to be actively controlled by the ECU 40 or other control system.

The clutches can be used in any combination of front wheels, rear wheels, front and real wheels, all wheels, etc. The hydraulic lines connecting the various components of the hydraulic circuits can be separate lines that are attached by fittings to the valve, clutch, pump, etc. In the alternative, the hydraulic lines can be built into an existing vehicle drive train structure, such as the front or rear differential, transmission, etc. In such a case, the lines can be machined or molded directly into the casing of the differential, transmission, or other structure.

In addition, the clutches need not be of the multi-plate wet clutch variety. For example, centrifugal clutches, diaphragm clutches, hydraulic clutches /viscous clutches, single plate clutches, and other clutch types could be incorporated into the system of the disclosed subject matter.

As discussed in detail above, the pressure P1 or P3 (depending on whether providing standby or active pressure) in the pump line 20 is substantially the same along its entire length. In addition, the pressure P2 in the piston line 10a is substantially the same along its entire length. It should be noted that the pressure is considered to be substantially the same in each of these lines, respectively, even though there are certain minor variations caused by head loss, friction loss, etc., in each of the hydraulic circuit lines. The pressure in any given portion of the hydraulic circuit is substantially changed by operating structures that are configured to either act upon or to be acted upon by a hydraulic fluid resulting in a change of pressure of the hydraulic fluid. These operating structures include but are not limited to pumps, valves, pistons/cylinders, turbines, vanes, accumulators, regulators, change-over valves, heat exchangers, etc.

In addition, while the ECU 40 and PCU 42 are described as receiving and outputting signals to control motor rotation and valve actuation, the ECU 40 and PCU 42 can control (and indirectly control) through the use of other variables that are measured in the system, including fluid pressures, fluid flow, clutch torque transfer rates, etc.

## Claims

1. An apparatus for transferring a torque from a vehicle drive train to multiple wheels of a vehicle, comprising:
a rear drive axle; a rear differential at least two clutches (10, 12) each having a driven part and a driving part; wherein the separate ones of the clutches (10, 12) are located on opposite sides of the rear differential a hydraulic system (1) configured to actuate each of the clutches (10, 12) by placing the driven part into engagement with the driving part, the hydraulic system (1) including
at least two pistons configured to move each of the driven parts into engagement with a respective driving part when an operating hydraulic fluid pressure is supplied to the pistons,
at least two pumps (30) configured to supply an output hydraulic fluid pressure,
wherein each of the pumps is driven by a motor (36),
at least two purge valves each located between and connected in parallel with one of the pumps (30) and a respective one of the pistons,
a first hydraulic line connecting directly between a first of the pistons and a first of the purge valves such that there is no substantial change of hydraulic pressure along the first hydraulic line,
a second hydraulic line connecting directly between a second of the pistons and a second of the purge valves such that there is no substantial change of hydraulic pressure along the second hydraulic line,
a third hydraulic line connecting directly between a first of the pistons and a first of the pumps,
a fourth hydraulic line connecting directly between a second of the pistons and a second of the pumps; and
a controller configured to control the pumps (30) and the purge valves to provide a desired hydraulic pressure to respective ones of the pistons, wherein the controller is configured to send a signal to the motor (36, 36a) to increase pump output from the first or second pump (30a, b) respectively thereby increasing the pressure in the first or second pump line (20a, b) respectively to an active pressure which is greater than the desired operating pressure for the respective clutch (10, 12), when the controller determines that actuation of one of the clutches is desired, and the controller is furthermore configured to then control the first and second purge valve (32a, b) respectively to divert hydraulic fluid from the first and second pump line (20a, b) respectively such that the pressure in the respective piston line (12a, b) is maintained at a pressure which is substantially equal to the desired pressure of the respective clutch (10, 12)

2. The apparatus of Claim 1, wherein the purge valves are variable-type linear solenoid valves.

3. The apparatus of any of the preceding claims, wherein the first hydraulic line and the second hydraulic line are not connected to an accumulator.

4. The apparatus of any of the preceding claims, wherein the controller is configured to operate a first one of the pumps (30) and a first motor at a second output pressure when a respective first of the pistons is not actuated causing the hydraulic fluid to continue moving through the hydraulic system (1) and thereby provide cooling to at least a portion of the apparatus.

5. The apparatus of any of the preceding claims, wherein the controller is configured to operate a second one of the pumps (30) and a second motor at a second output pressure when a respective second of the pistons is not actuated causing the hydraulic fluid to continue moving through the hydraulic system (1) and thereby provide cooling to at least a position of the apparatus.

6. The apparatus of any of the preceding claims, further comprising:
a first motor connected to the first pump (30a); and
a second motor connected to the second pump (30b) and independently controllable with respect to the first motor and first pump (30b).

7. The apparatus of any of the preceding claims, wherein the controller includes means for causing the first pump (30a) and the first motor to operate at a standby output pump pressure when the first clutch is not actuated causing the hydraulic fluid to continue moving through the hydraulic system and causing the hydraulic fluid to provide at least one of cooling and lubrication to the hydraulic system (1).

8. The apparatus of any of the preceding claims, wherein the controller includes means for causing the second pump (30b) and the second motor to operate at a second standby output pump pressure when the second clutch is not actuated causing the hydraulic fluid to continue moving through the hydraulic system and causing the hydraulic fluid to provide at least one of cooling and lubrication to the hydraulic system (1).

9. The apparatus of any of the preceding claims, wherein the hydraulic system is configured such that a second pump pressure of hydraulic fluid is substantially the same along the entire second pump hydraulic line from the second pump (30b) to the second purge valve, and the hydraulic system (1) is also configured such that a second piston pressure of hydraulic fluid is substantially the same along the entire second piston hydraulic line from the second purge valve to the second piston.

10. A method for transmitting torque to at least two vehicle drive components, comprising:
providing a first vehicle clutch configured to transmit torque from a vehicle power unit to a first vehicle wheel when the first vehicle clutch is actuated;
arranging the first vehicle clutch between a rear axle differential and a left rear vehicle wheel
providing a second vehicle clutch configured to transmit torque from the vehicle power unit to a second vehicle wheel when the second vehicle clutch is actuated;
arranging the second vehicle clutch between the rear axle differential and a right rear vehicle wheel
providing a first hydraulic circuit including hydraulic fluid and in which a first pump is connected by a first pump line to a first purge valve, and the first purge valve is connected to a first piston by a first piston line, the first piston being configured to actuate the first vehicle clutch when a first operating pressure of the hydraulic fluid is applied to the first piston, and the first pump being configured to act on the hydraulic fluid to output a first pump hydraulic pressure;
providing a second hydraulic circuit including hydraulic fluid and in which a second pump is connected by a second pump line to a second purge valve, and the second purge valve is connected to a second piston by a second piston line, the second piston being configured to actuate the second vehicle clutch when a second operating pressure of the hydraulic fluid is applied to the second piston, and the second pump (30b) being configured to act on the hydraulic fluid to output a second pump hydraulic pressure;
controlling a hydraulic fluid pressure in the first piston line without the use of an accumulator by opening the first purge valve to cause hydraulic fluid pressure in the first piston line to be substantially equal to the operating hydraulic pressure for the first piston; and
controlling a hydraulic fluid pressure in the second piston line without the use of an accumulator by opening the second purge valve to cause hydraulic fluid pressure in the second piston line to be substantially equal to the operating hydraulic pressure for the second piston,
providing a third hydraulic line directly connecting a first of the pistons and a first of the pumps,
providing a fourth hydraulic line directly connecting a second of the pistons and a second of the pumps; and
determining if the clutches (10, 12) need to be actuated, and, in case it is determined that the clutches need to be actuated, sending a control signal to motor (36) to increase the pump output from the first or second pump (30a, b) respectively thereby increasing the pressure in the first or second pump line (20a, b) respectively to an active pressure which is greater than the desired operating pressure for the respective , clutch, control the first and second purge value (32a, b) respectively to divert hydraulic fluid from the first and second pump line (20a, b) respectively such that the pressure in the respective piston line (12a, b) is maintained at a pressure which is substantially equal to the desired operating pressure of the respective clutch (10, 12).

11. The method of any of the preceding claims, further including:
continuously operating the first pump (30a) and first motor to circulate hydraulic fluid through the first hydraulic circuit both when the first vehicle clutch is actuated and when the first vehicle clutch is not actuated, thereby providing a source of at least one of cooling and lubrication.

12. The method of any of the preceding claims, further comprising:
providing a first motor connected to the first pump (30a) and a second motor connected to the second pump (30b);
separately and independently providing power to the first motor and the second motor.

13. The method of any of the preceding claims, further comprising:
independently and selectively controlling the first purge valve and the second purge valve causing the first vehicle clutch and the second vehicle clutch to be independently and selectively actuated to provide a first torque transmission via the first vehicle clutch that is different from a second torque transmission via the second vehicle clutch.

14. The method of any of the preceding claims, further comprising:
controlling hydraulic fluid pressure in the first piston line causing the hydraulic fluid pressure not to surpass the first operating pressure.

15. The method of any of the preceding claims, wherein providing the first purge valve includes providing the first purge valve connected in parallel with the first pump (30a) and the first piston.

## Patentansprüche

1. Vorrichtung zum Übertragen eines Drehmoments von einem Fahrzeugantriebsstrang auf mehrere Räder eines Fahrzeugs, die aufweist:
eine hintere Antriebsachse;
ein hinteres Differential;
wenigstens zwei Kupplungen (10, 12), wobei jede einen angetriebenen Teil und
einen antreibenden Teil hat, wobei die getrennten Kupplungen (10, 12) auf entgegengesetzten Seiten des hinteren Differentials angeordnet sind;
ein hydraulisches System (1), das konfiguriert ist, um jede der Kupplungen (10, 12) zu betätigen, indem der angetriebene Teil in Eingriff mit dem antreibenden Teil gebracht wird, wobei das hydraulische System (1) umfasst:
wenigstens zwei Kolben, die konfiguriert sind, um jeden der angetriebenen Teile in Eingriff mit einem jeweiligen antreibenden Teil zu bewegen, wenn ein betätigendes hydraulisches Fluid an die Kolben geliefert wird,
wenigstens zwei Pumpen (30), die konfiguriert sind, um einen hydraulischen Ausgangsdruck zu liefern,
wobei jede der Pumpen von einem Motor (36) angetrieben wird,
wenigstens zwei Ablassventile, die jeweils zwischen einer der Pumpen (30) und einem jeweiligen der Kolben und parallel dazu angeschlossen sind,
eine erste hydraulische Leitung, die direkt zwischen einem ersten der Kolben und einem ersten der Ablassventile verbindet, so dass es keine wesentliche Änderung des hydraulischen Drucks entlang der ersten hydraulischen Leitung gibt,
eine zweite hydraulische Leitung, die direkt zwischen einem zweiten der Kolben und einem zweiten der Ablassventile verbindet, so dass es keine wesentliche Änderung des hydraulischen Drucks entlang der zweiten hydraulischen Leitung gibt;
eine dritte hydraulische Leitung, die direkt zwischen dem ersten der Kolben und einer ersten der Pumpen verbindet,
eine vierte hydraulische Leitung, die direkt zwischen einem zweiten der Kolben und einer zweiten der Pumpen verbindet; und
eine Steuerung, die konfiguriert ist, um die Pumpen (30) und die Ablassventile zu steuern, um einen gewünschten hydraulischen Druck an jeweilige der Kolben bereitzustellen,
wobei die Steuerung konfiguriert ist, um ein Signal an den Motor (36, 36a) zu senden, um die Pumpenausgabe von der ersten oder zweiten Pumpe (30a, b) jeweils zu erhöhen, um dadurch jeweils den Druck in der ersten oder zweiten Pumpenleitung (20a, b) auf einen aktiven Druck zu erhöhen, der höher als der gewünschte Betriebsdruck der jeweiligen Kupplung (10, 12) ist, wenn die Steuerung bestimmt, dass die Betätigung einer der Kupplungen erwünscht ist,
und die Steuerung außerdem konfiguriert ist, um dann das erste und zweite Ablassventil (32a, b) jeweils zu steuern, um das Hydraulikfluid jeweils von der ersten und zweiten Pumpenleitung (20a, b) derart abzuleiten, dass der Druck in der jeweiligen Kolbenleitung (12a, b) auf einem Druck gehalten wird, der im Wesentlichen gleich dem gewünschten Druck der jeweiligen Kupplung (10, 12) ist.

2. Vorrichtung nach Anspruch 1, wobei die Absaugventile variable, lineare Magnetventile sind.

3. Vorrichtung nach einem der vorhergehenden Ansprüche, wobei die erste hydraulische Leitung und die zweite hydraulische Leitung nicht mit einem Akkumulator verbunden sind.

4. Vorrichtung nach einem der vorhergehenden Ansprüche, wobei die Steuerung konfiguriert ist, um eine erste der Pumpen (30) und einen ersten Motor bei einem zweiten Ausgangsdruck zu betreiben, wenn ein jeweiliger erster der Kolben nicht betätigt wird, was bewirkt, dass das Hydraulikfluid sich weiterhin durch das hydraulische System (1) bewegt und dadurch wenigstens die Kühlung eines Abschnitts der Vorrichtung bereitgestellt wird.

5. Vorrichtung nach einem der vorhergehenden Ansprüche, wobei die Steuerung konfiguriert ist, um eine zweite der Pumpen (30) und einen zweiten Motor bei einem zweiten Ausgangsdruck zu betreiben, wenn ein jeweiliger zweiter der Kolben nicht betätigt wird, was bewirkt, dass das Hydraulikfluid sich weiterhin durch das hydraulische System (1) bewegt und dadurch wenigstens die Kühlung eines Abschnitts der Vorrichtung bereitgestellt wird.

6. Vorrichtung nach einem der vorhergehenden Ansprüche, die ferner aufweist:
einen ersten Motor, der mit der ersten Pumpe (30a) verbunden ist; und
einen zweiten Motor, der mit der zweiten Pumpe (30b) verbunden ist und in Bezug auf den ersten Motor und die erste Pumpe (30b) unabhängig steuerbar ist.

7. Vorrichtung nach einem der vorhergehenden Ansprüche, wobei die Steuerung Einrichtungen umfasst, um zu bewirken, dass die erste Pumpe (30a) und der erste Motor bei einem Bereitschaftspumpenausgangsdruck arbeiten, wenn die erste Kupplung nicht betätigt wird, was bewirkt, dass das Hydraulikfluid sich weiterhin durch das hydraulische System bewegt, und bewirkt, dass das Hydraulikfluid die Kühlung und/oder Schmierung des hydraulischen Systems (1) bereitstellt.

8. Vorrichtung nach einem der vorhergehenden Ansprüche, wobei die Steuerung Einrichtungen umfasst, um zu bewirken, dass die zweite Pumpe (30b) und der zweite Motor bei einem zweiten Bereitschaftspumpenausgangsdruck arbeiten, wenn die erste Kupplung nicht betätigt wird, was bewirkt, dass das Hydraulikfluid sich weiterhin durch das hydraulische System bewegt, und bewirkt, dass das Hydraulikfluid die Kühlung und/oder Schmierung des hydraulischen Systems (1) bereitstellt.

9. Vorrichtung nach einem der vorhergehenden Ansprüche, wobei das hydraulische System derart konfiguriert ist, dass ein zweiter Pumpendruck des Hydraulikfluids im Wesentlichen entlang der gesamten zweiten hydraulischen Pumpenleitung von der zweiten Pumpe (30b) zu dem zweiten Ablassventil gleich ist, und das hydraulische System (1) auch derart konfiguriert ist, dass ein zweiter Kolbendruck des Hydraulikfluids im Wesentlichen entlang der gesamten zweiten hydraulischen Kolbenleitung von dem zweiten Ablassventil zu dem zweiten Kolben gleich ist.

10. Verfahren zum Übertragen eines Drehmoments an wenigstens zwei Fahrzeugantriebskomponenten, das aufweist:
Bereitstellen einer ersten Fahrzeugkupplung, die konfiguriert ist, um ein Drehmoment von einer Fahrzeugantriebseinheit auf ein erstes Fahrzeugrad zu übertragen, wenn die erste Fahrzeugkupplung betätigt wird;
Anordnen der ersten Fahrzeugkupplung zwischen einem Hinterachsendifferential und einem linken Fahrzeughinterrad;
Bereitstellen einer zweiten Fahrzeugkupplung, die konfiguriert ist, um ein Drehmoment von der Fahrzeugantriebseinheit auf ein zweites Fahrzeugrad zu übertragen, wenn die zweite Fahrzeugkupplung betätigt wird;
Anordnen der zweiten Fahrzeugkupplung zwischen dem Hinterachsendifferential und einem rechten Fahrzeughinterrad;
Bereitstellen eines ersten Hydraulikkreises, der ein Hydraulikfluid enthält, in dem eine erste Pumpe durch eine erste Pumpenleitung mit einem ersten Ablassventil verbunden ist und das erste Ablassventil durch eine erste Kolbenleitung mit einem ersten Kolben verbunden ist, wobei der erste Kolben konfiguriert ist, um die erste Fahrzeugkupplung zu betätigen, wenn ein erster Betriebsdruck des Hydraulikfluids an den ersten Kolben angelegt wird, und die erste Pumpe konfiguriert ist, um auf das Hydraulikfluid zu wirken, um einen ersten hydraulischen Pumpendruck auszugeben;
Bereitstellen eines zweiten Hydraulikkreises, der ein Hydraulikfluid enthält, in dem eine zweite Pumpe durch eine zweite Pumpenleitung mit einem zweiten Ablassventil verbunden ist und das zweite Ablassventil durch eine zweite Kolbenleitung mit einem zweiten Kolben verbunden ist, wobei der zweite Kolben konfiguriert ist, um die zweite Fahrzeugkupplung zu betätigen, wenn ein zweiter Betriebsdruck des Hydraulikfluids an den zweiten Kolben angelegt wird, und die zweite Pumpe (30b) konfiguriert ist, um auf das Hydraulikfluid zu wirken, um einen zweiten hydraulischen Pumpendruck auszugeben;
Steuern eines Hydraulikfluiddrucks in der ersten Kolbenleitung ohne die Verwendung eines Akkumulators durch Öffnen des ersten Ablassventils, um zu bewirken, dass der Hydraulikfluiddruck in der ersten Kolbenleitung im Wesentlichen gleich dem hydraulischen Betriebsdruck des ersten Kolbens ist; und
Steuern eines Hydraulikfluiddrucks in der zweiten Kolbenleitung ohne die Verwendung eines Akkumulators durch Öffnen des zweiten Ablassventils, um zu bewirken, dass der Hydraulikfluiddruck in der zweiten Kolbenleitung im Wesentlichen gleich dem hydraulischen Betriebsdruck des zweiten Kolbens ist;
Bereitstellen einer dritten hydraulischen Leitung, die einen ersten der Kolben und eine erste der Pumpen direkt verbindet;
Bereitstellen einer vierten hydraulischen Leitung, die einen zweiten der Kolben und eine zweite der Pumpen direkt verbindet; und
Bestimmen, ob die Kupplungen (10, 12) betätigt werden müssen, und falls bestimmt wird, dass die Kupplungen betätigt werden müssen, Senden eines Steuersignals an den Motor (36), um die Pumpenausgangsleistung von der ersten oder zweiten Pumpe (30a, b) jeweils zu erhöhen, um dadurch jeweils den Druck in der ersten oder zweiten Pumpenleitung (20a, b) auf einen aktiven Druck zu erhöhen, der höher als der gewünschte Betriebsdruck für die jeweilige Kupplung ist, das erste und zweite Ablassventil (32a, b) jeweils zu steuern, um das Hydraulikfluid von der ersten und zweiten Pumpenleitung (20a, b) jeweils derart abzuleiten, dass der Druck in der jeweiligen Kolbenleitung (12a, b) auf einem Druck aufrecht erhalten wird, der im Wesentlichen gleich dem gewünschten Betriebsdruck der jeweiligen Kupplung (10, 12) ist.

11. Verfahren nach einem der vorhergehenden Ansprüche, das ferner umfasst:
kontinuierliches Betreiben der ersten Pumpe (30a) und des ersten Motors, um sowohl, wenn die erste Fahrzeugkupplung betätigt wird, als auch, wenn die zweite Fahrzeugkupplung nicht betätigt wird, Hydraulikfluid durch den ersten Hydraulikkreis zu zirkulieren, wodurch eine Quelle für die Kühlung und/oder die Schmierung bereitgestellt wird.

12. Verfahren nach einem der vorhergehenden Ansprüche, das ferner aufweist:
Bereitstellen eines mit der ersten Pumpe (30a) verbundenen ersten Motors, und eines mit der zweiten Pumpe (30b) verbundenen zweiten Motors;
getrenntes und unabhängiges Bereitstellen von Leistung an den ersten Motor und den zweiten Motor.

13. Verfahren nach einem der vorhergehenden Ansprüche, das ferner aufweist:
unabhängiges und selektives Steuern des ersten Ablassventils und des zweiten Ablassventils, was bewirkt, dass die erste Fahrzeugkupplung und die zweite Fahrzeugkupplung unabhängig und selektiv betätigt werden, um eine erste Drehmomentübertragung über die erste Fahrzeugkupplung bereitzustellen, die sich von einer zweiten Drehmomentübertragung über die zweite Fahrzeugkupplung unterscheidet.

14. Verfahren nach einem der vorhergehenden Ansprüche, das ferner aufweist:
Steuern des Hydraulikfluiddrucks in der ersten Kolbenleitung, was bewirkt, dass der Hydraulikfluiddruck den ersten Betriebsdruck nicht übersteigt.

15. Verfahren nach einem der vorhergehenden Ansprüche, wobei das Bereitstellen des ersten Ablassventils das Bereitstellen des ersten Ablassventils parallel zu der ersten Pumpe (30a) und dem ersten Kolben umfasst.

## Revendications

1. Dispositif pour transférer un couple d'une transmission de véhicule à de multiples roues d'un véhicule, comprenant :
un essieu moteur arrière ;
un différentiel arrière ;
au moins deux embrayages (10, 12) comportant chacun une partie entraînée et une partie d'entraînement,
dans lequel des embrayages séparés parmi les embrayages (10, 12) sont situés sur les côtés opposés du différentiel arrière ;
un système hydraulique (1) configuré pour actionner chacun des embrayages (10, 12) en plaçant la partie entraînée en prise avec la partie d'entraînement, le système hydraulique (1) comprenant :
au moins deux pistons configurés pour déplacer chacune des parties entraînées en prise avec une partie d'entraînement respective lorsqu'une pression de fluide hydraulique de fonctionnement est fournie aux pistons,
au moins deux pompes (30) configurées pour fournir une pression de fluide hydraulique de sortie,
dans lequel chacune des pompes est entraînée par un moteur (36),
au moins deux vannes de purge situées chacune entre et reliées en parallèle à l'une des pompes (30) et un piston respectif parmi les pistons,
une première conduite hydraulique reliée directement entre un premier des pistons et une première des vannes de purge de sorte qu'il n'y ait aucun changement sensible de pression hydraulique le long de la première conduite hydraulique,
une deuxième conduite hydraulique reliée directement entre un deuxième des pistons et une deuxième des vannes de purge de sorte qu'il n'y ait aucun changement sensible de pression hydraulique le long de la deuxième conduite hydraulique,
une troisième conduite hydraulique reliée directement entre un premier des pistons et une première des pompes,
une quatrième conduite hydraulique reliée directement entre un deuxième des pistons et une deuxième des pompes ; et
un contrôleur configuré pour commander les pompes (30) et les vannes de purge pour fournir une pression hydraulique souhaitée aux pistons respectifs parmi les pistons,
dans lequel le contrôleur est configuré pour envoyer un signal au moteur (36, 36a) pour augmenter la sortie de pompe de la première ou de la deuxième pompe (30a, b), respectivement, pour augmenter de ce fait la pression dans la première ou la deuxième conduite de pompe (20a, b), respectivement, à une pression active qui est supérieure à la pression de fonctionnement souhaitée pour l'embrayage (10, 12) respectif, lorsque le contrôleur détermine que l'actionnement de l'un des embrayages est souhaité, et le contrôleur est en outre configuré pour commander ensuite les première et deuxième vannes de purge (32a, b), respectivement, pour dériver le fluide hydraulique des première et deuxième conduites de pompe (20a, b), respectivement, de sorte que la pression dans la conduite de piston (12a, b) respective soit maintenue à une pression qui est sensiblement égale à la pression souhaitée de l'embrayage (10, 12) respectif.

2. Dispositif selon la revendication 1, dans lequel les vannes de purge sont des électrovannes linéaires de type variable.

3. Dispositif selon l'une des revendications précédentes, dans lequel la première conduite hydraulique et la deuxième conduite hydraulique ne sont pas reliées à un accumulateur.

4. Dispositif selon l'une quelconque des revendications précédentes, dans lequel le contrôleur est configuré pour faire fonctionner une première des pompes (30) et un premier moteur à une deuxième pression de sortie lorsqu'un premier piston respectif parmi les pistons n'est pas actionné, amenant le fluide hydraulique à continuer de se déplacer à travers le système hydraulique (1) et à effectuer de ce fait le refroidissement d'au moins une partie du dispositif.

5. Dispositif selon l'une quelconque des revendications précédentes, dans lequel le contrôleur est configuré pour faire fonctionner une deuxième des pompes (30) et un deuxième moteur à une deuxième pression de sortie lorsqu'un deuxième piston respectif parmi les pistons n'est pas actionné, amenant le fluide hydraulique à continuer de se déplacer à travers le système hydraulique (1) et à effectuer de ce fait le refroidissement d'au moins une partie du dispositif.

6. Dispositif selon l'une quelconque des revendications précédentes, comprenant en outre :
un premier moteur relié à la première pompe (30a) ; et
un deuxième moteur relié à la deuxième pompe (30b) et pouvant être commandé de manière indépendante par rapport au premier moteur et à la première pompe (30b).

7. Dispositif selon l'une quelconque des revendications précédentes, dans lequel le contrôleur comprend des moyens pour amener la première pompe (30a) et le premier moteur à fonctionner à une pression de pompe de sortie d'attente lorsque le premier embrayage n'est pas actionné, amenant le fluide hydraulique à continuer de se déplacer à travers le système hydraulique et amenant le fluide hydraulique à effectuer au moins l'un du refroidissement et de la lubrification du système hydraulique (1).

8. Dispositif selon l'une quelconque des revendications précédentes, dans lequel le contrôleur comprend des moyens pour amener la deuxième pompe (30b) et le deuxième moteur à fonctionner à une deuxième pression de pompe de sortie d'attente lorsque le deuxième embrayage n'est pas actionné, amenant le fluide hydraulique à continuer de se déplacer à travers le système hydraulique et amenant le fluide hydraulique à effectuer au moins l'un du refroidissement et de la lubrification du système hydraulique (1).

9. Dispositif selon l'une quelconque des revendications précédentes, dans lequel le système hydraulique est configuré de sorte qu'une deuxième pression de pompe du fluide hydraulique soit sensiblement identique le long de la deuxième conduite hydraulique de pompe entière de la deuxième pompe (30b) à la deuxième vanne de purge, et le système hydraulique (1) est également configuré de sorte qu'une deuxième pression de piston du fluide hydraulique soit sensiblement identique le long de la deuxième conduite hydraulique de piston entière de la deuxième vanne de purge au deuxième piston.

10. Procédé pour transmettre un couple à au moins deux composants d'entraînement de véhicule, consistant à :
prévoir un premier embrayage de véhicule configuré pour transmettre un couple d'une unité de puissance de véhicule à une première roue de véhicule lorsque le premier embrayage de véhicule est actionné ;
agencer le premier embrayage de véhicule entre un différentiel d'essieu arrière et une roue arrière gauche de véhicule ;
prévoir un deuxième embrayage de véhicule configuré pour transmettre un couple de l'unité de puissance de véhicule à une deuxième roue de véhicule lorsque le deuxième embrayage de véhicule est actionné ;
agencer le deuxième embrayage de véhicule entre le différentiel d'essieu arrière et une roue arrière droite du véhicule ;
prévoir un premier circuit hydraulique comprenant un fluide hydraulique et dans lequel une première pompe est reliée par une première conduite de pompe à une première vanne de purge, et la première vanne de purge est reliée à un premier piston par une première conduite de piston, le premier piston étant configuré pour actionner le premier embrayage de véhicule lorsqu'une première pression de fonctionnement du fluide hydraulique est appliquée au premier piston, et la première pompe étant configurée pour agir sur le fluide hydraulique pour délivrer une première pression hydraulique de pompe ;
prévoir un deuxième circuit hydraulique comprenant un fluide hydraulique et dans lequel une deuxième pompe est reliée par une deuxième conduite de pompe à une deuxième vanne de purge, et la deuxième vanne de purge est reliée à un deuxième piston par une deuxième conduite de piston, le deuxième piston étant configuré pour actionner le deuxième embrayage de véhicule lorsqu'une deuxième pression de fonctionnement du fluide hydraulique est appliquée au deuxième piston, et la deuxième pompe (30b) étant configurée pour agir sur le fluide hydraulique pour délivrer une deuxième pression hydraulique de pompe ;
commander une pression de fluide hydraulique dans la première conduite de piston sans l'utilisation d'un accumulateur en ouvrant la première vanne de purge pour amener la pression de fluide hydraulique dans la première conduite de piston à être sensiblement égale à la pression hydraulique de fonctionnement pour le premier piston ; et
commander une pression de fluide hydraulique dans la deuxième conduite de piston sans l'utilisation d'un accumulateur en ouvrant la deuxième vanne de purge pour amener la pression de fluide hydraulique dans la deuxième conduite de piston à être sensiblement égale à la pression hydraulique de fonctionnement pour le deuxième piston ;
prévoir une troisième conduite hydraulique reliant directement un premier des pistons et une première des pompes ;
prévoir une quatrième conduite hydraulique reliant directement un deuxième des pistons et une deuxième des pompes ; et
déterminer si les embrayages (10, 12) doivent être actionnés, et, dans le cas où il est déterminé que les embrayages doivent être actionnés, envoyer un signal de commande au moteur (36) pour augmenter la sortie de pompe de la première ou de la deuxième pompe (30a, b), respectivement, pour augmenter de ce fait la pression dans la première ou la deuxième conduite de pompe (20a, b), respectivement, à une pression active qui est supérieure à la pression de fonctionnement souhaitée pour l'embrayage respectif, commander les première et deuxième vannes de purge (32a, b), respectivement, pour dériver le fluide hydraulique des première et deuxième conduites de pompe (20a, b), respectivement, de sorte que la pression dans la conduite de piston (12a, b) respective soit maintenue à une pression qui est sensiblement égale à la pression de fonctionnement souhaitée de l'embrayage (10, 12) respectif.

11. Procédé selon l'une quelconque des revendications précédentes, consistant en outre à :
mettre en oeuvre continûment la première pompe (30a) et le premier moteur pour faire circuler le fluide hydraulique à travers le premier circuit hydraulique à la fois lorsque le premier embrayage de véhicule est actionné et lorsque le premier embrayage de véhicule n'est pas actionné, réalisant de ce fait une source d'au moins l'un d'un refroidissement et d'une lubrification.

12. Procédé selon l'une quelconque des revendications précédentes, consistant en outre à :
prévoir un premier moteur relié à la première pompe (30a) et un deuxième moteur relié à la deuxième pompe (30b) ;
fournir, séparément et de manière indépendante, une puissance au premier moteur et au deuxième moteur.

13. Procédé selon l'une quelconque des revendications précédentes, consistant en outre à :
commander, de manière indépendante et sélective, la première vanne de purge et la deuxième vanne de purge, provoquant l'actionnement de manière indépendante et sélective du premier embrayage de véhicule et du deuxième embrayage de véhicule pour réaliser une première transmission de couple par l'intermédiaire du premier embrayage de véhicule qui est différente d'une deuxième transmission de couple par l'intermédiaire du deuxième embrayage de véhicule.

14. Procédé selon l'une quelconque des revendications précédentes, consistant en outre à :
commander la pression de fluide hydraulique dans la première conduite de piston, en faisant en sorte que la pression de fluide hydraulique ne dépasse pas la première pression de fonctionnement.

15. Procédé selon l'une quelconque des revendications précédentes, dans lequel la prévision de la première vanne de purge comprend la prévision de la première vanne de purge reliée en parallèle avec la première pompe (30a) et le premier piston.
